# EUROPÄISCHE PATENTSCHRIFT

(11) **EP 1 384 928 B1**
(45) Veröffentlichungstag und Bekanntmachung des Hinweises auf die Patenterteilung: **16.05.2007**
(21) Anmeldenummer: 03016477.6
(22) Anmeldetag: 22.07.2003
(51) Int. Cl.: F16L 3/10

(54) **Rohrschelle**
Support clamp for pipe
Collier de fixation de tuyau

(30) Priorität: 23.07.2002 DE 10233338
(43) Veröffentlichungstag der Anmeldung: 28.01.2004
(73) Patentinhaber: Schulte, Helmut, 58507 Lüdenscheid (DE)
(72) Erfinder: Schulte, Helmut, 58507 Lüdenscheid (DE)
(74) Vertreter: Dörner, Lothar

(56) Entgegenhaltungen:
- EP-A- 0 123 363
- EP-A- 0 760 445
- EP-A- 1 195 548

## Beschreibung

Die Erfindung betrifft eine Rohrschelle aus einem halbringförmigen Tragbügel und einem ebenfalls halbringförmigen Schwenkbügel, die beide in radial ausgerichteten Laschen enden, nämlich einerseits in durch eine Gelenkachse verbundene Gelenklaschen und andererseits in Verbindungslaschen, von denen die Verbindungslasche des Tragbügels einen Gelenkzapfen hält und die Verbindungslasche des Schwenkbügels mit einem etwa in Schwenkrichtung ausgerichteten Schlitz über den Gelenkzapfen greift, wobei der Schlitz eine Schlitzwand aufweist, die ein nachgiebiges, in den Schlitz hineinreichendes Sperrprofil aufnimmt.

Eine solche Rohrschelle ist aus EP 1 195 548 A bekannt. Bei der bekannten Rohrschelle ist auf der Lasche mit Schlitz ein Sicherungsschuh aus Kunststoff angeordnet, der in den Schlitz hineinreicht. Um ein Zurückschwenken des Schwenkbügels zu verhindern, muss der Sicherungsschuh sehr genau ausgebildet sein, damit die Funktion der Rohrschelle nicht beeinträchtigt wird. Die Montage des Sicherungsschuhs ist aufwendig.

Aufgabe der Erfindung ist eine sichere und einfache Ausbildung des Sperrprofils, damit das Öffnen und Schließen des Schwenkbügels nicht behindert wird.

Diese Aufgabe wird nach der Erfindung dadurch gelöst, dass das Sperrprofil in der äußeren Schlitzwand vorgesehen, ringförmig ausgebildet und in einer Nut der Stirnwand der Verbindungslasche festgelegt ist.

Die Erfindung unterscheidet sich insofern vom Stand der Technik, als das Sperrprofil in der äußeren Schlitzwand vorgesehen, ringförmig ausgebildet und nachgiebig in den Schlitz hinreichend festgelegt ist. Beim Einschwenken des Schwenkbügels wird das Sperrprofil verformt und kehrt wieder in seine Ausgangslage zurück. Dadurch wird der Schlitz sicher gesperrt, sodass ein Zurückschwenken des Schwenkbügels nicht möglich ist. Eine sichere Montage der Rohrschelle ist gewährleistet. Die genaue Ausrichtung des Sperrprofils ist sichergestellt.

Ein wirtschaftliches Sperrprofil wird dadurch erzielt, daß das Sperrprofil Teil eines O-Rings oder Teil einer ringförmigen Scheibe ist.

Zur Erleichterung der Handhabung ist vorgesehen, daß die Verbindungslasche stirnseitig eine von der anderen Verbindungslasche weggerichtete Abbiegung aufweist.

Ein Ausführungsbeispiel wird anhand der Zeichnung erläutert, in der darstellen:

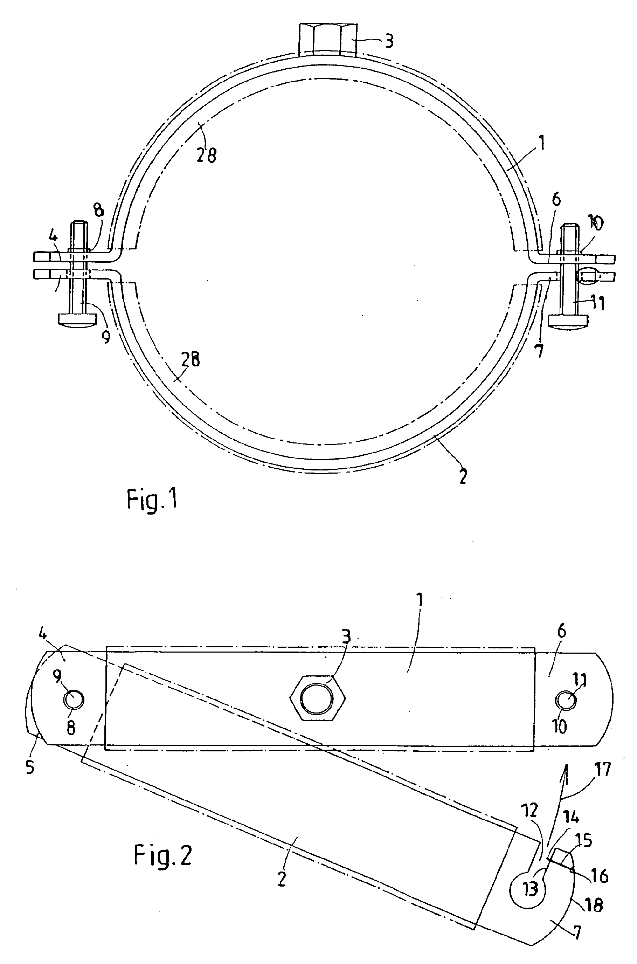

Fig. 1 eine Ansicht der Rohrschelle in axialer Richtung und
Fig. 2 eine Draufsicht zu Fig. 1.

Die Rohrschelle umfaßt einen halbringförmigen Tragbügel 1 und einem halbringförmigen Schwenkbügel 2, die jeweils aus einem Verstärkungsicken aufweisenden Blechteil geformt sind. An dem Tragbügel 1 ist eine Gewindehülse 3 befestigt, insbesondere angeschweißt. Die Gewindehülse 3 nimmt eine nicht dargestellte Gewindestange auf, die zur Abhängung an einer Decke oder zur Abstützung an einer Kanalwandung dient. Der Tragbügel 1 und der Gelenkbügel 2 enden jeweils in eine radial zur Tragbügelachse ausgerichtete Gelenklasche 4, 5 und in eine Verbindungslasche 6, 7. Gegebenenfalls tragen der Tragbügel 1 und der Schwenkbügel 2 einen dämpfenden Überzug oder Mantel 8, der nicht näher erläutert ist.

Die Gelenklasche 4 ist mit einem Gewindedurchzug 8 ausgestattet, in den eine Schraube 9 eingreift. Diese Schraube 9 stellt die Gelenkachse dar, um die der Schwenkbügel 2 schwenkbar ist. Die Verbindungslasche 6 ist ebenfalls mit einem Gewindedurchzug 10 ausgestattet, in den eine Schraube eingreift.

Innerhalb der Verbindungslasche 7 ist in Schwenkrichtung ein Schitz 12, gegebenenfalls mit verbreiterter Wurzel ausgebildet. Die äußere Schlitzwand 13 nimmt ein nachgiebiges Sperrprofil 14 auf. Das Sperrpofil 14 ist Teil eines Ringes 15, z.B. eines O-Ringes oder einer Scheibe aus nachgiebigem und elastischem Werkstoff. Der Ring 15 ist in einer Nut 16 der Verbindungslasche 7 geführt. Die Breite des Schlitzes 12 ist auf den Durchmesser des Schaftes der Schraube 11 abgestimmt. Das Sperrprofil 14 verringert die Breite des Schlitzes 12, so daß beim Durchtritt des Schaftes der Schraube 11 eine Verformung des Sperrprofils 14 erfolgt. Diese Verformung ist im Einzelnen nicht dargestellt. Das Sperrprofil kann auch an der inneren Wandung des Schlitzes 12 vorgesehen sein. Der Endbereich der Verbinduungslasche 7 kann stirnseitig eine von der anderen Verbindungslasche 6 weggerichtete Abbiegung aufweisen, was das Anheben der Verbindungslasche 6 bei der Montage erleichtert.

Im Gebrauch der Rohrschelle wird zunächst der Tragbügel 1 mittels der Gewindehülse 3 an einem Tragelement, also einer Decke oder einer Tragschiene befestigt. Mit aufgeschwenktem Schwenkbügel 2 wird das jeweilige Rohr in den Tragbügel 1 eingelegt, der Schwenkbügel wird in Pfeilrichtung 17 eingeschwenkt. Beim Durchtritt des Schaftes der Schraube 11 wird das Sperrprofil 14 verformt und kehrt nach Durchtritt des Schaftes wieder in seine Ausgangslage zurück. Da das Sperrprofil 14 in den Querschnitt des Spaltes 12 hineinragt, wird ein Zurückschwenken des Schwenkbügels 2 verhindert. Dadurch bleibt der Schwenkbügel in der Montagestellung, so daß der Monteur die Rohrschelle ohne weiteres befestigen kann. Der Ring 15 kann ein O-Ring oder eine ringförmige Scheibe aus einem Thermoplast sein.

## Patentansprüche

1. Rohrschelle aus einem halbringförmigen Tragbügel (1) und einem ebenfalls halbringförmigen Schwenkbügel (2), die beide in radial ausgerichteten Laschen enden, nämlich einerseits in durch eine Gelenkachse verbundene Gelenklaschen (4, 5) und andererseits in Verbindungslaschen (6, 7), von denen die Verbindungslasche (6) des Tragbügels (1) einen Gelenkzapfen hält und die Verbindungslasche (7) des Schwenkbügels (2) mit einem etwa in Schwenkrichtung ausgerichteten Schlitz (12) über den Gelenkzapfen greift, wobei der Schlitz (12) eine Schlitzwand (13) aufweist, die ein nachgiebiges, in den Schlitz (12) hineinreichendes Sperrprofil (14) aufnimmt, **dadurch gekennzeichnet, dass** das Sperrprofil (14) in der äußeren Schlitzwand (13) vorgesehen, ringförmig ausgebildet und in einer Nut (16) der Stirnwand (18) der Verbindungslasche (7) festgelegt ist.

2. Rohrschelle nach Anspruch 1, **dadurch gekennzeichnet, dass** das Sperrprofil (14) Teil eines O-Rings (15)ist.

3. Rohrschelle nach Anspruch 1, **dadurch gekennzeichnet, dass** das Sperrprofil (14) Teil einer ringförmigen Scheibe ist.

4. Rohrschelle nach einem der Ansprüche 1 bis 3, **dadurch gekennzeichnet, dass** die Verbindungslasche (7) stirnseitig eine von der anderen Verbindungslasche (6) weggerichtete Abbiegung aufweist.

## Claims

1. Support clamp for pipe consisting of a semi-ring shaped support strap (1) and a semi-ring shaped swivelling strap (2), both of which end in radially aligned plates - on the one side in hinge plates (4, 5) joined by a hinge axle and on the other side in connecting plates (6, 7) of which the connecting plate (6) of the support strap (1) holds a hinge pin and the connecting plate (7) of the swivelling strap (2) has a slot (12) pointing in the swivelling direction which hooks over the hinge pin, where the slot (12) has a slot wall (13) which receives a resilient locking profile (14) which extends into the slot (12), **characterised in that** the locking profile (14) is provided in the outer wall (13) of the slot, ring-shaped and fixed in a groove (16) of the front wall (18) of the connecting plate (7).

2. Support clamp for pipe according to claim 1, **characterised in that** the locking profile (14) is part of an O-ring (15).

3. Support clamp for pipe according to claim 1, **characterised in that** the locking profile (14) is part of ring-shaped disk.

4. Support clamp for pipe according to claims 1 to 3, **characterised in that** the connecting plate (7) has a bend on the front side pointing away from the other connecting plate (6).

## Revendications

1. Collier de fixation de tuyau, composé d'un étrier porteur (1) en forme de demi-anneau et d'un étrier pivotant (2) également en forme de demi-anneau, étriers qui se terminent tous deux par des pattes à orientation radiale, à savoir d'un côté par des pattes articulées (4, 5) reliées par un axe d'articulation, et de l'autre par des pattes de liaison (6, 7), la patte (6) de l'étrier porteur (1) retenant un pivot d'articulation et la patte (7) de l'étrier pivotant (2) engrenant sur le pivot d'articulation par le biais d'une fente (12) orientée approximativement dans le sens de pivotement, sachant que la fente (12) présente une paroi (13) recevant un profilé de blocage (14) faisant saillie dans la fente (12) mais cédant sous l'application d'une force, **caractérisé en ce que** le profilé de blocage (14) est prévu dans la paroi extérieure (13) de la fente, est de forme annulaire et immobilisé dans une rainure (16) ménagée dans la paroi frontale (18) de la patte de liaison (7).

2. Collier de fixation de tuyau selon la revendication 1, **caractérisé en ce que** le profilé de blocage (14) fait partie d'un joint torique (15).

3. Collier de fixation de tuyau selon la revendication 1, **caractérisé en ce que** le profilé de blocage (14) fait partie d'une rondelle annulaire.

4. Collier de fixation de tuyau selon l'une des revendications 1 à 3, **caractérisé en ce que** la patte de liaison (7) présente côté frontal une incurvation l'éloignant de l'autre patte de liaison (6).
